# NEUE EUROPÄISCHE PATENTSCHRIFT

(11) **EP 1 038 662 B2**
(45) Veröffentlichungstag und Bekanntmachung des Hinweises auf die Entscheidung über den Einspruch: **21.04.2010**
(45) Hinweis auf die Patenterteilung: 29.11.2006
(21) Anmeldenummer: 00105434.5
(22) Anmeldetag: 15.03.2000
(51) Int. Cl.: B32B 5/02, E04F 15/20, E04D 5/10

(54) **Bodendämmelement**
Insulation element for floors
Elément d'isolation pour sol

(30) Priorität: 25.03.1999 DE 19913496
(43) Veröffentlichungstag der Anmeldung: 27.09.2000
(73) Patentinhaber: Deutsche Rockwool Mineralwoll GmbH & Co. OHG, 45966 Gladbeck (DE)
(72) Erfinder: Klose, Gerd-Rüdiger, Dr., 46286 Dorsten (DE)
(74) Vertreter: Wanischeck-Bergmann, Axel

(56) Entgegenhaltungen:
- DE-A- 3 615 109
- DE-A- 4 037 865
- DE-A1- 3 928 741
- DE-C1- 4 409 416
- DE-C1- 19 514 420
- DE-U- 1 744 167
- DE-U- 1 884 021
- DE-U1- 9 016 281
- DE-U1- 29 621 670
- DE-U1- 29 718 702
- PATENT ABSTRACTS OF JAPAN vol. 015, no. 463 (M-1183), 25. November 1991 (1991-11-25) & JP 03 199544 A (MITSUI PETROCHEM IND LTD), 30. August 1991 (1991-08-30)

## Beschreibung

Die Erfindung betrifft ein als Trittschalldämmelement ausgebildeten Bodendämmelement, vorzugsweise aus Steinwollefasern, bestehend aus zumindest einer als Parallelepiped ausgebildeten Dämmplatte mit zwei parallel zueinander verlaufenden großen Oberflächen und vier Seitenflächen, die rechtwinklig zu den großen Oberflächen angeordnet sind, wobei jeweils zwei Seitenflächen parallel zueinander verlaufen. Die Erfindung betrifft ferner einen Boden- oder Deckenaufbau, insbesondere für Gebäude, bestehend aus einer tragenden Unterkonstruktion, auf der eine Schalldämmschicht aus als Trittschalldämmplatten ausgebildeten Bodendämmelementen angeordnet ist, und einem Bodenbelag. Schließlich betrifft die Erfindung ein Verfahren zur Herstellung eines derartigen Boden- oder Deckenaufbaues, bei dem eine Schalldämmschicht aus als Trittschalldämmplatten ausgebildeten Bodendämmelementen auf einer Unterkonstruktion angeordnet und abschließend ein Bodenbelag aufgebracht wird.

Zur Dämmung des Körper- bzw. Trittschalls und des Luftschalls sowie zur Erhöhung des Wärmeschutzes von Fußböden und Decken sowie Sohlplatten im Kontakt mit dem Erdreich werden begehbare lastverteilende Bodenplatten als sogenannte schwimmende Estriche auf Dämmplatten, insbesondere biegeweichen Dämmplatten verlegt. Es werden hierbei Anhydrit-, Zement- , Magnesia- oder Gußasphaltestriche, sogenannte Trokkenestriche und Fließestriche unterschieden. Am häufigsten werden Zementestriche eingebaut. Die Bestandteile des Estrichs, Sand, Zement und Wasser werden in der Regel vor Ort, d. h. auf der Baustelle gemischt und mit einer Pumpe zum Verarbeitungsort gefördert. Um die Fließeigenschaften der Estriche zu verbessern, enthalten diese oberflächenaktive Substanzen, so daß die Estriche unter der Einwirkung der Schwerkraft auseinanderlaufen und selbstnivellierend sind.

Alternativ zu den Fließestrichen sind die bereits voranstehend genannten Trockenestriche bekannt. Die Trockenestriche sind aus einzelnen Elementen aufgebaut und bestehen beispielsweise aus Spanplatten oder sonstigen Platten aus Holzwerkstoffen, aus Gipskarton- oder Gipsfaserplatten. Diese plattenförmigen Elemente werden auf der Dämmschicht angeordnet, wobei die einzelnen Platten untereinander durch Verklebung verbunden werden.

Aus wirtschaftlichen Gründen werden die oberhalb der Dämmschicht angeordneten Estriche möglichst dünn ausgeführt. Aus Schallschutzgründen ist es aber vorteilhaft, die Estriche möglichst dick auszubilden.

Die Verbesserung des Schallschutzes beginnt oberhalb der Resonanzfrequenz des schwimmenden Estrichs. Um die kritische Resonanzfrequenz des schwimmenden Estrichs so niedrig wie möglich zu halten, hat es sich als vorteilhaft erwiesen, Dämmplatten mit einer möglichst geringen dynamischen Steifigkeit zu verwenden. Unter der dynamischen Steifigkeit einer Dämmplatte ist der Widerstand der Dämmplatten gegenüber Schwingungen, also Wechselkräften zu verstehen. Die dynamische Steifigkeit setzt sich aus der Steifigkeit des tragenden Gerüstes und der in dem Dämmstoff eingeschlossenen Luft zusammen. Sofern der innere Strömungswiderstand ausreichend hoch ist, begrenzt letzten Endes die Steifigkeit der eingeschlossenen Luft die minimal erreichbare Steifigkeit der gesamten Platte. Die Steifigkeit der Platte ist umgekehrt proportional zur Dicke, d. h. eine wirkungsvolle Dämmschicht muß immer eine ausreichende Dicke aufweisen.

Für die Trittschalldämmung eignen sich insbesondere Hartschaumplatten aus beispielsweise expandiertem Polystyrol-Hartschaum gemäß DIN 18164 sowie Faserdämmstoffe aus Mineral- oder Naturfasern gemäß DIN 18165 Teil 2. Die Dämmplatten werden charakterisiert durch ihre Lieferdicke d_{L} und einer belasteten Dicke d_{B}, die bei einer Belastung von 2 kN/m² bestimmt wird. Vor der Bestimmung von d_{B} werden die Prüfkörper einer Vorbelastung von 48 kN/m² resp. 50 kN/m² nach europäischer Norm unterzogen. Diese Vorbelastung soll ein bei der Verarbeitung auftretendes Belastungsäquivalent darstellen. Die Nenndickendifferenz d_{L} - d_{B} wird auf 5 mm, bei Dämmplatten unter Trockenestrichen sogar auf 3 mm begrenzt. Die normgemäße Abstufung der Dicken unter Belastung beträgt z. B. bei DIN 18165 Teil 2 für d_{B} 10, 15, 20, 25, 30 mm. Die Dämmplatten müssen somit selbst bei geringen Dicken eine relativ hohe Formbeständigkeit unter Last aufweisen, gleichzeitig sollen sie aber biegeweich sein.

Die Verlegung der Dämmplatten erfolgt in der Regel einlagig, wobei in seltenen Fällen auch eine zwei- oder mehrlagige Verlegung der Dämmplatten auf einer tragenden Unterkonstruktion möglich ist. Hierbei ist darauf zu achten, daß die Dämmplatten mit möglichst dicht gestoßenen Fugen verlegt sind. Die maximal erreichbare Schalldämmung wird darüberhinaus durch Rohrleitungen, insbesondere Heizungsrohrleitungen nachteilig beeinflußt, die vielfach über die Decken geführt sind. Weiterhin besteht das Problem, daß die Schalldämmung durch auf der Decke aufstehende Wände reduziert wird, was insbesondere dadurch verhindert werden soll, daß die auf der Dämmschicht angeordnete Estrichschicht durch Randstreifen akustisch von den Wänden entkoppelt wird. Diese Randstreifen bestehen in der Regel aus Mineralfasern. Verwendung finden aber auch elastifizierte PSE-Hartschäume oder Kunststoff-Folien mit eingeschlossenen Luftschichten.

Bevor der Estrich aufgetragen wird, wird die Dämmschicht mit einer zumindest 0,1 mm dicken Folie, beispielsweise aus Polyäthylen abgedeckt. Durch diese Abdeckung wird verhindert, daß ein Teil der Estrichmasse zwischen die Dämmplatten bis auf die tragende Unterkonstruktion, in der Regel eine Betondecke, gelangt und dann äußerst wirksame Schallbrükken bildet. Bei Decken über offenen Durchfahrten oder dergleichen dient die Folie darüberhinaus als Dampfbremse.

Der Einbau dieser eine Dampfbremse darstellenden Folie bringt aber in der überwiegenden Zahl der Fälle nur Nachteile mit sich. Die feuchte bis nasse Estrichschicht kann nur über die Fläche der tragenden Unterkonstruktion austrocknen, da die Dampfbremse eine Verdunstung der Estrichfeuchtigkeit in den Raum verhindert. Die nur 3 bis 6 cm hohen Seitenflächen der vor Ort aus Mischungen hergestellten Estrichschichten sind naturgemäß aufgrund ihrer geringen Größe nicht geeignet, eine ausreichende Feuchtigkeitsdiffusion zu ermöglichen. Die einseitige Trocknung der Estrichschicht führt regelmäßig zu Verformungen der Estrichscheiben.

Darüberhinaus hat die dampfbremsende Folie den Nachteil, daß die auch von der als Betondecke ausgebildeten tragenden Unterkonstruktion abgegebene Feuchte nicht ausreichend und schnell abgeführt werden kann. Diese Feuchte dringt in die Dämmschicht ein und führt zu einer unerwünschten Erhöhung der relativen Feuchte in der Dämmschicht.

Die voranstehend beschriebenen Nachteile der als Dampfbremse ausgebildeten Folien führt ferner dazu, daß feuchteempfindliche Bodenbeläge, beispielsweise Holzfußboden, wie Parkett oder textile Bodenbeläge mit dampfbremsendem Rücken erst sehr spät, d. h. nach einer langen Trocknungsphase aufgebracht werden können. Diese Nachteile verzögern den Baufortschritt und eine frühzeitige Nutzung der Räume.

Neben den voranstehend beschriebenen Nachteilen bei der Erstellung von Neubauten bestehen auch während der Nutzung der Gebäude entsprechende Nachteile, beispielsweise durch Rohrbrüche oder durch von außen in die Dämmschicht eindringendes Wasser. Hierbei besteht die Gefahr, daß das Wasser über die offenen Seitenfugen in die Dämmschicht gelangt und auch nur über diesen Weg wieder herausdiffundieren kann. Der Diffusionsstrom über die tragende Unterkonstruktion ist zu gering, um wirkungsvoll zu sein. Die Kapillaraktivität der auf der tragenden Unterkonstruktion aufstehenden Wände ist nur begrenzt wirksam, sinkt deutlicher oder wird sogar völlig unterbrochen, wenn die Seitenstreifen aus Mineralwolle oder die Randbereiche aus Mineralwoll-Dämmplatten schneller trocknen als die Kernflächen, so daß die Kapillaraktivität in diesen Zonen abgebrochen ist. Wenn aber das Wasser zu lange auf die Dämmschicht einwirkt, wird diese dauerhaft geschädigt und ist nicht mehr gebrauchstauglich. In diesen Fällen muß der gesamte Boden- bzw. Dekkenaufbau erneuert werden.

Bei der Herstellung eines voranstehend beschriebenen Boden- und Dekkenaufbaues werden die Dämmplatten bereits beim Auslegen auf der tragenden Unterkonstruktion mehrfach begangen. Die Belastungen der Oberfläche der Dämmstoffe wird hierbei durch die Profilierung der Schuhsohlen bzw. durch die Scherung beim Hinknien oder Wiederaufstehen verstärkt. Bei dieser partiellen Belastung werden durch schwergewichtige Personen ohne weiteres Teilflächen-Belastungen in der Größenordnung von 100 kN/m² erzeugt. Nach dem Auslegen der voranstehend beschriebenen Folie, die randlich bis über die Oberkante des Estrichs gezogen werden muß, wird die krümelige oder auch fließfähige Estrichmischung auf die Dämmschicht aufgetragen. Die Verteilung der Estrichmasse erfolgt manuell von einer einer Wandöffnung am weitesten entfernt liegenden Raumecke ausgehend. Die manuelle Verteilung der Estrichmasse führt zu einem weiteren Begehen der Dämmschicht mit der damit verbundenen partiellen Belastung. Die Belastung tritt sowohl bei der Verteilung eines Fließestrichs als auch bei der Anordnung eines Trockenestrichs auf. Bei der Verteilung eines Fließestrichs stehen die Handwerker in der flüssigen Masse, die so niedrig viskos ist, daß sie keine Schutzwirkung für die Dämmschicht ausübt. Bei den üblichen Verarbeitungsverfahren besteht somit immer die Gefahr, daß die Dämmschicht lokal beschädigt oder zerstört wird und sich hierdurch Schallbrücken bilden.

Eine Alternative zu den Dämmstoffen aus Fasermateriialien stellen Dämmstoffe aus Polystyrol-Hartschäumen dar, die bei konstanten Raumtemperaturen relativ formbeständig sind. Die Druckspannung von Platten aus Polystyrol-Hartschaum beträgt üblicherweise > 60 bis 70 kN/m² bei einer Verformung von 10%. Der Werkstoff selbst ist zähplastisch und widersteht demzufolge auch den mechanischen Beanspruchungen beim Begehen der Dämmschicht. Die Biegezugfestigkeit des Polystyrol-Hartschaums ist allerdings sehr gering, so daß hohl liegende Ecken beim Begehen ab- und hohl liegende Platten durchbrechen können. Die leichten Platten verschieben sich zudem beim Begehen.

Trittschalldämmplatten aus Mineralwolle werden im Rohdichtebereich von ca. 70 bis 130 kg/m³ hergestellt und verwendet. Damit ist die Rohdichte deutlich niedriger als z. B. bei Dämmplatten für Flachdach-Konstruktionen, die in der Errichtungsphase der Flachdach-Konstruktion ähnlich hohen Belastungen durch das Begehen und durch Materialtransporte ausgesetzt sind. Die in Flachdach-Konstruktionen eingesetzten Platten sind zudem noch wesentlich dicker, so daß lokale Belastungen durch elastische Verformungen der Struktur aufgenommen werden können, während die 13 bis ca. 35 mm dicken Trittschalldämmplatten praktisch durchgetreten werden können.

Die die Trittschalldämmplatten charakterisierende dynamische Steifigkeit ist von der Dicke und der Orientierung der Faser sowie dem Bindemittelgehalt abhängig. Die Werte für die dynamische Steifigkeit variieren zwischen ca. 5 bis 35 MN/m³.

Dämmplatten, die aus Glasfasern hergestellt sind, welche insbesondere als lange flach gelagerte Fasern gebildet sind, sind weniger formstabil, weisen aber die niedrigsten dynamischen Steifigkeiten auf.

Die hier im wesentlichen betrachteten Bodendämmelemente aus Steinwollefasern werden vornehmlich auf sogenannten Mehrrad-Zerfaserern hergestellt. Bei dieser Herstellungsmethode werden kurze, in sich gekrümmte und zu Flocken aggregierte Fasern gebildet. Die Dämmplatten weisen deshalb in der Fläche eine relativ geringe Zugfestigkeit auf. Nachteilig für den inneren Zusammenhalt und für die Widerstandsfähigkeit beim Begehen ist auch das Vorhandensein von Bereichen oder Zonen, in denen die Fasern infolge mangelhafter Bindemittelverteilung weniger fest oder gar nicht miteinander verbunden sind. Derartig hergestellte Trittschalldämmplatten sind zwar generell weniger kompressibel und in der Fläche tragfähiger, weisen dabei aber eine hier unerwünschte höhere dynamische Steifigkeit auf. Um die dynamische Steifigkeit zu reduzieren, ist es üblich, die Struktur durch Überwalzen partiell zu zerstören und die Platte somit zu elastifizieren. Die partielle Zerstörung der Struktur führt aber dazu, daß die Widerstandsfähigkeit der Trittschalldämmplatten beim Begehen verringert ist.

Trittschalldämmplatten aus Mineralfasern werden alternativ mehrlagig hergestellt, d. h. der ursprüngliche Fasermassenstrom wird mit Hilfe von Sägen horizontal in mehrere Einzellagen aufgeteilt, die anschließend zu einzelnen Platten zugeschnitten werden. Es liegt in der Art und Weise dieses Herstellungsverfahrens, daß die Platten aus der Mitte des Fasermassenstroms eine andere, zumeist weniger biegezugfeste Struktur aufweisen, als die obere und untere Platte, in denen infolge der Höhenkompression vor dem Härteofen ein größerer Anteil der Fasern horizontal gelagert werden. Die geschnittenen Oberflächen sind empfindlich gegenüber Belastungen.

Ausgehend von diesem Stand der Technik liegt der Erfindung die **Aufgabe** zugrunde, ein Bodendämmelement zu schaffen, das in einfacher Weise verarbeitet werden kann und bei dem Feuchtigkeit aus der Dämmung in schneller und einfacher Weise abgeführt wird.

Die **Lösung** dieser Aufgabenstellung sieht vor, daß zumindest eine große Oberfläche der Dämmplatte eine diffusionsoffene und wasserabweisende Kaschierung aufweist und daß die Kaschierung eine diffusionsäquivalente Luftschichtdicke s_{D} < 5 m, vorzugsweise < 1 m hat.

Durch die Anordnung einer diffusionsoffenen und wasserabweisenden Kaschierung wird der Vorteil erzielt, daß die in der Unterkonstruktion ggf. in der Dämmschicht enthaltene Feuchtigkeit in Richtung des Estrichs aus diesen Bestandteilen diffundieren kann, wohingegen die Feuchtigkeit des aufgebrachten Estrichs oder eines Bodenbelagsklebers nicht durch die Kaschierung in die Dämmschicht eindringen kann. Gleichzeitig verhindert die Kaschierung ein Eindringen von später auftretendem Wasser, beispielsweise durch Rohrleitungsbrüche oder dergleichen in die Dämmschicht. Selbst für den Fall, daß Feuchtigkeit in die Dämmschicht eindringt, kann diese über die Kaschierung in eine Richtung aus der Dämmschicht abgeführt werden. Die Kaschierung ist demzufolge semipermeabel, wobei eine Permeabilität lediglich aus der Dämmschicht heraus durch die Kaschierung existiert. In umgekehrter Richtung wirkt die Kaschierung wassersperrend.

Gemäß einer Weiterbildung eines erfindungsgemäßen Bodendämmelementes ist vorgesehen, daß die Kaschierung auf der Oberfläche befestigt ist. Es bestehen verschiedene Möglichkeiten, eine derartige Kaschierung auf der Oberfläche der Dämmplatte zu befestigen. Vorzugsweise ist eine Verklebung vorgesehen, die flächig oder teilflächig ausgebildet ist.

Die Kaschierung ist insbesondere als Folie, Vlies, Schaumschicht oder dergleichen ausgebildet, soweit die notwendigen Eigenschaften hinsichtlich der Diffusionsoffenheit und Wasserabweisung erzielt sind.

Vorzugsweise ist die als Folie ausgebildete Kaschierung eine Polyamid-Folie, deren Wasserdampfdurchlässigkeit sich mit der Feuchte im Boden verändert.

Bei der Verwendung von Vliesen als Kaschierung weisen diese vorzugsweise Monofile aus Polyäthylen, Polypropylen, Polyester, Polyamid sowie Mischungen daraus und / oder anorganischen Gläsern auf. Diese Vliese können vorwiegend flächige Gebilde sein. Ebenso sind naturgemäß Vliese aus geschlungenen oder gewellten Fasern geeignet, um die voranstehend beschriebenen Wirkungen hinsichtlich der Diffusionsoffenheit und Wasserabweisung der Kaschierung zu erfüllen. Die Dicken der hier verwendeten Vliese sind vorzugsweise kleiner als 20 mm, wobei die Dicke abhängig von der Kompressibilität und dem Verhältnis von d_{L} zu d_{B} ist.

Alternativ können Gewebe aus Kunststoff-Fasern, Glasfasern und / oder verrottungsbeständige Naturfasern als Kaschierung vorgesehen sein. Die Fasern können entweder jeweils allein oder in Gemischen miteinander verwebt oder versponnen sein und werden auf eine Oberfläche des Bodendämmelementes aufgebracht.

Eine weitere erfindungsgemäße Variante besteht darin, eine Polyurethan-Weichschaumschicht als Kaschierung aufzubringen, wobei die Weichschaumschicht einseitig mit einer Polyurethan-Membran beschichtet ist.

Die voranstehend beschriebenen Lösungsmöglichkeiten und Weiterbildungen des erfindungsgemäßen Bodendämmelementes weisen übereinstimmend diffusionsäquivalente Luftschichtdicken s_{D} < 5 m, vorzugsweise < 1 m sowie Wasserabweisung gegen z. B. Wasser mit einem pH-Wert < ca. 8 auf. Bei der Weichschaumschicht ist eine gewisse Wasseraufnahme und Wasserspeicherung zulässig, die verhindert, daß Wasser in das Dämmelement, insbesondere aus Mineralfasern gelangt.

Wie bereits ausgeführt, kann die Verklebung der Kaschierung, insbesondere der Vliese und Gewebe mit der Dämmplatte vollflächig oder partiell erfolgen. Die partielle Verklebung hat insbesondere bei der Verwendung von Glasvliesen oder Glasgeweben den Vorteil, daß eine bestimmte Elastizität erhalten bleibt, die sich als vorteilhaft beim Begehen des Bodendämmelementes zeigt.

Für die Verklebung der Kaschierung mit der Dämmplatte sind insbesondere flüssige oder pulverförmige Duroplasten, Thermoplasten, Elastomere, Ormocere, Kieselsol, Wasserglas-Kunststoff-Mischungen oder dergleichen vorgesehen. Die aufgebrachte Kaschierung wird entweder bündig mit der Kante der Platte abgeschnitten oder mit versetzten überstehenden Flächen zugeschnitten. Demzufolge ist als weiteres Merkmal der Erfindung vorgesehen, daß die Kaschierung zumindest im Bereich einer Kante einer großen Oberfläche übersteht. Diese Ausgestaltung führt dazu, daß bei der Verlegung der Bodendämmelemente die Kaschierungen die Fugen zwischen benachbarten Dämmplatten überdecken, so daß ein Aufbringen von Fließestrichen nicht dazu führt, daß der Estrich in die Fugen zwischen benachbarten Dämmplatten gelangen kann. Demzufolge muß die Überlappung der Kaschierung so groß gewählt sein, daß die anschließend aufgebrachte Estrichmasse aufgefangen wird und somit das Aufbringen einer weiteren Abdichtfolie, die die vorteilhaften Wirkungen des erfindungsgemäßen Bodenelementes aufheben könnte, entfallen kann. Hierbei werden selbst Fließestriche von derartigen Kaschierungen aufgefangen. Unschädlich ist hierbei eine gewisse Permeabilität der Kaschierung, die ein partielles Eindringen in die Dämmplatte ermöglicht, so daß die Estrichschicht auf der Zugseite zu einer höheren Belastbarkeit führt.

In gleicher Weise kann vorgesehen, daß der Kleber in die große Oberfläche bis in eine Tiefe von ca. 5 mm eingebracht ist, um eine zugfeste Verbindung zwischen der Dämmplatte und der Kaschierung zu ermöglichen, wobei gleichzeitig eine hohe Elastizität der Dämmplatte erhalten bleiben soll. Hierbei besteht auch die Möglichkeit, daß in der Oberfläche der Dämmplatte mit Kleber ausfüllbare Ausnehmungen, insbesondere Nuten angeordnet sind. Diese Ausnehmungen können beispielsweise zwischen zwei parallelen Seitenkanten in gleichmäßigem Abstand zueinander und rechtwinklig zu den Seitenkanten angeordnet sein. Selbstverständlich besteht auch die Möglichkeit, die Ausnehmungen derart anzuordnen, daß sie sich unter einem bestimmten Winkel schneiden, wobei nicht zwingend ein rechter Winkel zwischen den zueinander verlaufenden Ausnehmungen vorgesehen sein muß.

Bei der Verwendung von reißfesten Kaschierungen, wie Vliese und / oder Gewebe besteht die Möglichkeit, großformatige Bodendämmelemente, insbesondere Trittschalldämmplatten mit Abmessungen 2 m x 1,2 m herzustellen. Derartig große Trittschalldämmplatten aus Mineralfasern weisen unkaschiert nicht die notwendige innere Festigkeit auf, um ohne Gefahr des Zerbrechens oder Auseinanderreißens transportiert und ausgelegt zu werden. Durch die erfindungsgemäß aufgebrachte Kaschierung wird die Verwendung derartig großer Trittschalldämmplatten ermöglicht.

Alternativ kann vorgesehen sein, daß mehrere Dämmplatten auf eine gemeinsame Kaschierung aufgeklebt sind. Die aufgeklebten Dämmplatten können gleichmäßig groß ausgebildet sein und beispielsweise eine Länge von 500 mm aufweisen. Erfindungsgemäß können an einem Ende der Kaschierung schmale Streifen aus Dämmaterial, beispielsweise von 2 cm bis 10 cm Länge angeordnet sein, damit der Verleger beim Ablängen einer derartig ausgebildeten Klappbahn nur noch die Kaschierung abschneiden muß. Hierbei können parallele Markierungsstreifen auf den Dämmplatten oder auf der Kaschierung vorgesehen sein, die das Ablängen erleichtern. Diese Markierungen können mit Hilfe von Farben oder durch Einbrennen gestaltet sein.

Neben dem erfindungsgemäßen Bodendämmelement ist ein Boden- oder Deckenaufbau insbesondere für Gebäude Gegenstand der Erfindung. Der erfindungsgemäße Boden- oder Deckenaufbau besteht aus einer tragenden Unterkonstruktion, auf der eine Schalldämmschicht angeordnet ist, und einem Bodenbelag. Die Unterkonstruktion kann beispielsweise aus einer Betondecke oder einer Holzbalkenkonstruktion mit einer Unterschalung bestehen. Unter einem Bodenbelag ist ein Estrich zu verstehen, der abschließend mit einem textilen Material oder einer Kunststoffabdeckung bzw. einem Holzboden überdeckt ist. Der Bodenbelag an sich kann aber auch aus einer Anordnung von Spanplatten bestehen, auf denen wiederum die voranstehend genannten Abdekkungen angeordnet sind. Erfindungsgemäß ist vorgesehen, daß zwischen dem Bodenbelag und der Unterkonstruktion, insbesondere auf der Schalldämmschicht eine diffusionsoffene und wasserabweisende Abdeckung, insbesondere in Form einer Folie angeordnet ist, wobei die Abdeckung eine diffusionsäquivalente Luftschichtdicke s_{D} < 5 m hat. Vorzugsweise ist die Abdeckung als Kaschierung gemäß den voranstehenden Ausführungen ausgebildet.

Die Abdeckung kann entweder Bestandteil der die Schalldämmschicht bildenden Dämmelemente sein oder als separates Bauteil nach der Verlegung der Schall-Dämmschicht aufgebracht werden.

Weiterhin ist Gegenstand der Erfindung ein Verfahren zur Herstellung eines Boden- oder Deckenaufbaus der voranstehend beschriebenen Ausgestaltung, bei dem eine Schalldämmschicht auf einer Unterkonstruktion angeordnet und abschließend ein Bodenbelag aufgebracht wird. Erfindungsgemäß wird vor dem Aufbringen des Bodenbelags die Schalldämmschicht mit einer diffusionsoffenen und wasserabweisenden Abdeckung überdeckt und die Abdeckung mit der Schalldämmschicht verklebt.

Hierbei kann vorgesehen sein, daß die Abdeckung derart erhitzt wird, daß sie sich flächig mit der Schalldämmschicht verbindet. Alternativ ist vorgesehen, daß die Abdeckung als pulverförmiges Harz oder thermoplastische Polymere, wie beispielsweise PS, PVC, PE, Acrylate, Phenol-Melaminharze allein oder in Gemischen auf die Schalldämmschicht aufgebracht und anschließend erhitzt wird.

Als wirtschaftlich besonders vorteilhaftes Verfahren hat sich eine Methode gezeigt, bei der zur Verfestigung der Oberfläche der Dämmelemente relativ dünne Folien aus Polyäthylen, Polypropylen, Polyvinylchlorid, Polyester oder ähnlichen Grundstoffen in Dicken < 500 µm, vorzugsweise zwischen 60 und 120 µm partiell oder vollflächig mit den Dämmplatten verklebt wird. In einer Weiterbildung ist vorgesehen, daß thermoplastische Folien soweit erhitzt werden, daß sie sich flächig mit der Dämmstoffoberfläche verbinden.

Ausreichende Verstärkungseffekte werden auch dadurch erreicht, daß beispielsweise zäh-plastische Kleber, wie Schmelzkleber, Bitumen, PUR-Ethyl-Polymer-Bitumen oder ähnliches streifenweise in Abständen von ca. 5 bis 20 mm oder mit sich überlagernden Streifen mit Maschenweiten von ca. 5 mm x 5 mm bis ca. 30 mm x 30 mm mit jeweils einer Tiefe von ca. 0,5 bis 5 mm auf bzw. in die Oberfläche der Mineralwolle-Dämmplatten eingebracht werden. Der Auftrag des Klebers erfolgt üblicherweise mit Hilfe entsprechend profilierter Übertragungswalzen.

Neben den voranstehend dargestellten Ausführungsformen der Erfindung kann diese auch dadurch verwirklicht werden, daß die Kaschierung auf normale Trittschalldämmplatten aus Polystyrol-Hartschaum, Mineralwolle oder aus sonstigen Dämmstoffen mit niedrigem Wasserdampfdiffusions-koeffizienten µ bahnenweise lose aufgelegt ist, wobei die einzelnen Bahnen eine ausreichende Überlappung aufweisen müssen. Hierbei ist es vorteilhaft, die einzelnen Bahnen zumindest im Randbereich zu fixieren, beispielsweise mit Wänden oder Bodenbestandteilen zu verkleben.

Weitere Merkmale und Vorteile des erfindungsgemäßen Bodendämmelementes bzw. des Boden- oder Deckenaufbaues ergeben sich aus der nachfolgenden Beschreibung der zugehörigen Zeichnung. In der Zeichnung zeigen:
- Figur 1: ein Bodendämmelement in einer ersten Ausführungsform in perspektivischer Ansicht;
- Figur 2: ein Bodendämmelement in einer zweiten Ausführungsform in perspektivischer Ansicht;
- Figur 3: ein Bodendämmelement in einer dritten Ausführungsform in perspektivischer Ansicht;
- Figur 4: einen Boden- oder Deckenaufbau in einer ersten Ausführungsform im Querschnitt;
- Figur 5: einen Boden- oder Deckenaufbau in einer zweiten Ausführungsform im Querschnitt und
- Figur 6: einen Boden- oder Deckenaufbau in einer dritten Ausführungsform im Querschnitt.

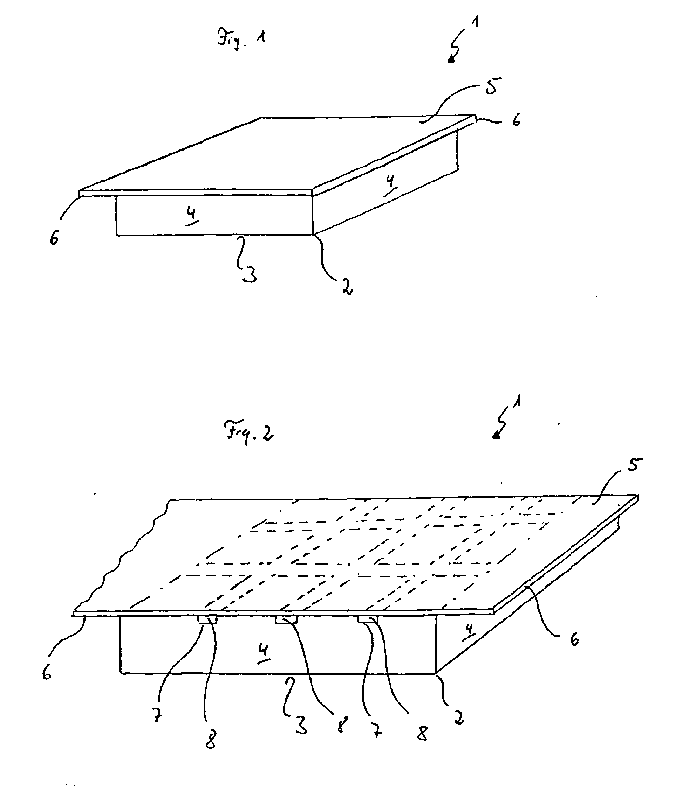

Ein in Figur 1 dargestelltes Bodendämmelement besteht aus einer Dämmplatte 2, die die Form eines Parallelepipeds aufweist und demzufolge zwei große Oberflächen 3 sowie vier Seitenflächen 4 hat. Die großen Oberflächen 3 sind parallel zueinander ausgerichtet und rechtwinklig zu den Seitenflächen 4 angeordnet, welche Seitenflächen 4 die beiden im Abstand zueinander angeordneten großen Oberflächen 3 miteinander verbinden. Von den Seitenflächen 4 verlaufen jeweils zwei parallel zueinander, wobei die Seitenflächen 4 jeweils rechtwinklig zu ihren benachbarten Seitenfläche 4 angeordnet sind.

Auf einer großen Oberfläche 3 weist das Bodendämmelement 1, welches als Trittschalldämmplatte ausgebildet ist, eine Kaschierung 5 auf. Die Kaschierung 5 besteht aus einer diffusionsoffenen und wasserabweisenden Polyamid-Folie, die semipermeabel ist, wobei die Kaschierung 5 eine Sperrfunktion von der Kaschierung 5 in Richtung auf die Dämmplatte 2 und eine permeable Funktion von der Dämmplatte 2 durch die Kaschierung 5 hat.

Die Kaschierung 5 hat eine diffusionsäquivalente Luftschichtdicke S_{D} von 1 m und ist auf der Oberfläche 3 der Dämmplatte 2 aufgeklebt.

Es ist zu erkennen, daß die Kaschierung 5 Randbereiche 6 hat, die über die Oberfläche 3 der Dämmplatte 2 hervorstehen, so daß die Randbereiche 6 Überlappungsbereiche für benachbart angeordnete Bodendämmelemente 1 bilden.

Die Verklebung der Kaschierung 5 mit der Dämmplatte 2 erfolgt vollflächig.

In Figur 2 ist eine weitere Ausführungsform eines Bodenelementes 1 dargestellt. Dieses Bodendämmelement 1 unterscheidet sich von dem Bodendämmelement 1 gemäß Figur 1 dadurch, daß die Randbereiche 6 nicht an benachbarten Seitenflächen 4 der Dämmplatte 2, sondern an gegenüberliegenden Seitenflächen 4 der Dämmplatte 2 angeordnet sind.

Darüberhinaus ist bei dem Bodendämmelement 1 keine vollflächige Verklebung zwischen der Dämmplatte 2 und der Kaschierung 5 vorgesehen. Vielmehr weist die Dämmplatte 2 in ihrer der Kaschierung 5 zugewandten Oberfläche 3 rechtwinklig zu den Seitenflächen 4 verlaufende Ausnehmungen 7 auf, die in Form von Nuten in die Oberfläche 3 der Dämmplatte 2 eingefräst sind. Die Ausnehmungen 7 sind mit einem thermoplastischen Kleber 8 gefüllt, über den eine partielle Verbindung zwischen der Dämmplatte 2 und der Kaschierung 5 hergestellt ist.

Die Ausnehmungen 7 verlaufen bei dem dargestellten Ausführungsbeispiel des Bodenelementes 1 jeweils zwischen zwei gegenüberliegenden Seitenflächen 4, so daß sich eine rasterförmige Anordnung der Ausnehmungen 7 ergibt.

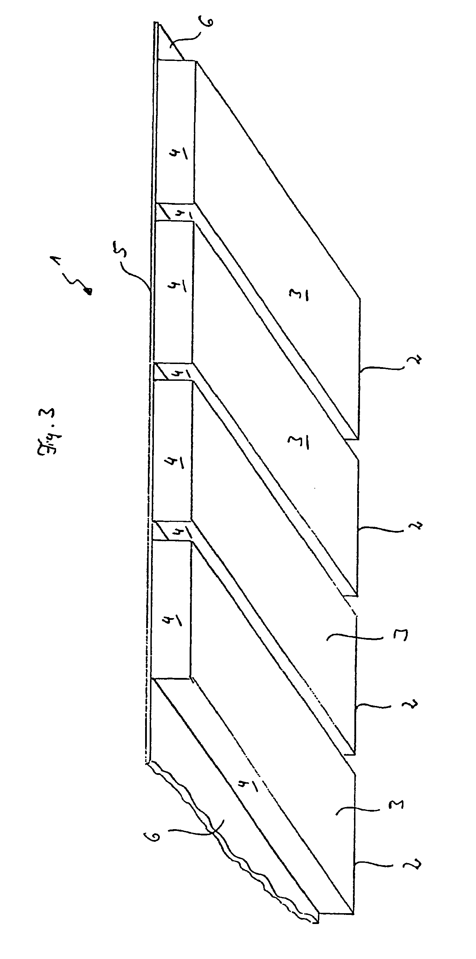

Eine weitere Ausführungsform eines Bodendämmelementes 1 ist in Figur 3 dargestellt. Dieses Bodendämmelement 1 besteht aus der Kaschierung 5 in Form einer Folie, auf die eine Vielzahl von identisch ausgebildeten Dämmplatten 2 in gleichmäßigem Abstand zueinander angeordnet sind. Mit diesem Bodendämmelement 2 läßt sich eine wesentliche Vereinfachung der Verlegearbeit erzielen. Gleichzeitig ist das Bodendämmelement 1 durch die Anordnung mehrerer Dämmplatten 2 auf einer Kaschierung 5 im Zwischenbereich benachbarter Dämmplatten 2 klappbar, so daß sich auch eine Vereinfachung bei der Verpackung und dem Versand ergibt. Die Ausführungsform gemäß Figur 3 zeigt einen bestimmten Abstand zwischen den benachbarten Dämmplatten 2, der selbstverständlich auch wesentlich kleiner ausgebildet werden kann, um ein vollflächiges Bodendämmelement 1 zu erhalten. Die Ausgestaltung eines Abstandes zwischen benachbarten Dämmplatten 2 kann den Vorteil haben, daß ein derartiges Bodendämmelement 1 insbesondere bei solchen Boden- und Deckenkonstruktionen Verwendung findet, die in gleichen Abständen angeordnete Träger aufweisen.

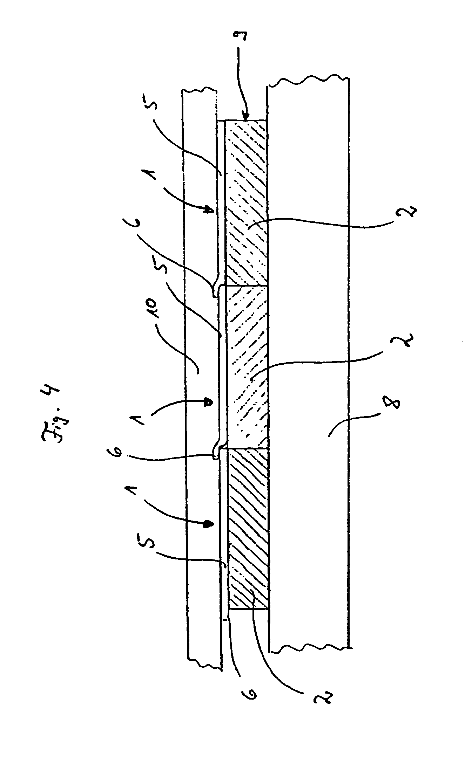

Die Figuren 4 bis 6 zeigen unterschiedliche Ausgestaltungen eines Boden- oder Deckenaufbaues unter Verwendung von Bodendämmelementen 1 gemäß den Figuren 1 bis 3.

In Figur 1 ist ein derartiger Boden- oder Deckenaufbau für Gebäude dargestellt. Der Boden- oder Deckenaufbau besteht aus einer tragenden Unterkonstruktion 8, die in Figur 4 als Betondecke ausgebildet ist. Oberhalb der tragenden Unterkonstruktion 8 ist eine Schalldämmschicht 9 angeordnet, die von einem Bodenbelag 10 überdeckt ist. Der Bodenbelag 10 ist gebildet durch einen Estrich, der wiederum Aufnahme für eine Bodenausgestaltung in Form eines Teppichbodens, eines Parketts, Steinfliesen oder dergleichen bildet.

Die Schalldämmschicht 9 besteht aus Bodendämmelementen 1, wie sie in Figur 1 dargestellt sind. Demzufolge besteht die Schalldämmschicht 9 aus einer Vielzahl von Dämmplatten 2, die jeweils eine Kaschierung 5 haben. Es ist zu erkennen, daß die Randbereiche 6 einer Dämmplatte 2 auf der Kaschierung 5 der benachbarten, bündig anliegenden Dämmplatte 2 aufliegen.

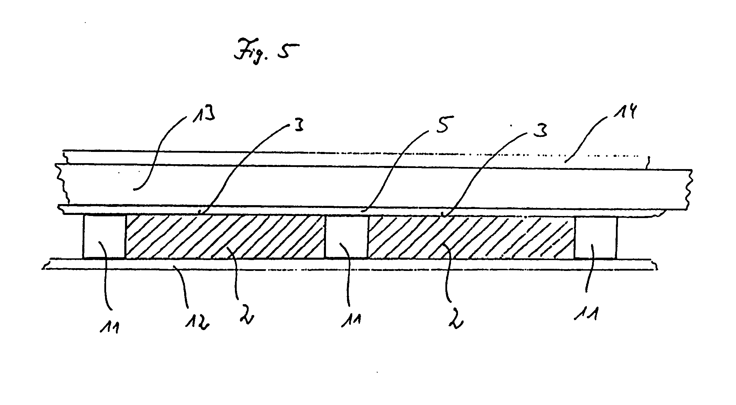

Eine alternative Ausgestaltung eines Boden- oder Deckenaufbaues ist in Figur 5 dargestellt. Bei diesem Boden- oder Deckenaufbau sind mehrere parallel zueinander ausgerichtete Träger 11, beispielsweise Holzbalken vorgesehen, die unterseitig mit einer Unterschalung 12 abgedeckt sind. Zwischen den Trägern 11 sind Dämmplatten 2 in Form von Trittschalldämmplatten angeordnet, die den Raum zwischen den Trägern 11 oberhalb der Unterschalung 12 derart ausfüllen, daß sie mit den Oberkanten der Träger 11 bündig abschließen.

Die Träger 11 und die Dämmplatten 2 sind mit einer Kaschierung 5 abgedeckt, die beispielsweise bahnenweise mit entsprechender Überlappung zwischen benachbarten Bahnen angeordnet ist. Die Kaschierung 5 kann im Bereich der Oberflächen der Träger 11 oder im Bereich der Oberflächen 3 der Dämmplatten 2 fixiert sein.

Auf der Kaschierung 5 ist ein Estrich 13 angeordnet, der sowohl als Fließestrich aber auch als Trockenestrich in Form von Spanplatten oder dergleichen ausgebildet sein kann. Nach dem Austrocknen des Estrichs 13 ist ein Bodenbelag 14 aufgebracht, der beispielsweise als Parkett ausgebildet ist.

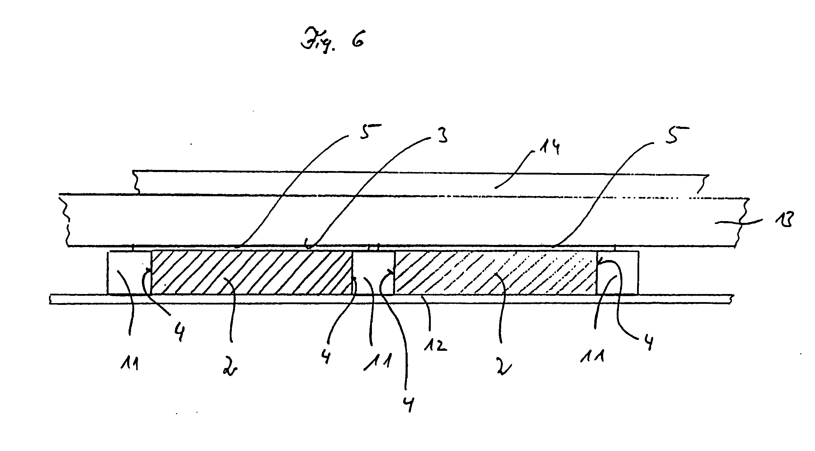

Schließlich ist in Figur 6 eine weitere Ausgestaltung eines Boden- oder Deckenaufbaues dargestellt, die im wesentlichen mit der Ausgestaltung gemäß Figur 5 übereinstimmt. Als Unterschied ist hier festzustellen, daß die Kaschierung 5 an der Dämmplatte 2 befestigt ist und sich an parallel verlaufenden Seitenflächen 4 der Dämmplatte über die Dämmplatte 2 zur Auflage auf den benachbarten Trägern erstreckt. Bei diesem Boden- oder Deckenaufbau können beispielsweise Bodendämmelemente 1 gemäß Figur 2 Verwendung finden.

Es versteht sich von selbst, daß der voranstehend beschriebene Boden- oder Deckenaufbau nicht ausschließlich für die Verwendung in Gebäuden vorgesehen ist. Vielmehr können derartige Boden- oder Deckenaufbauten auch im Fahrzeugbau, beispielsweise im Schiffsbau angewendet werden. Demzufolge sind die erfindungsgemäßen Bodendämmelemente auch für voranstehend nicht beschriebene Anwendungsgebiete vorgesehen.

## Patentansprüche

1. Als Trittschalldämmelement ausgebildetes Bodendämmelement, vorzugsweise aus Fasermaterial, insbesondere aus Mineralfasern, vorzugsweise Steinwollefasern, bestehend aus zumindest einer als Parallelepiped ausgebildeten Dämmplatte mit zwei parallel zueinander verlaufenden großen Oberflächen und vier Seitenflächen, die rechtwinklig zu den großen Oberflächen angeordnet sind, wobei jeweils zwei Seitenflächen parallel zueinander verlaufen,
**dadurch gekennzeichnet,**
**dass** zumindest eine große Oberfläche (3) eine diffusionsoffene und wasserabweisende Kaschierung (5) aufweist und dass die Kaschierung (5) eine diffusionsäquivalente Luftschichtdicke S_{D}< 5 m, vorzugsweise < 1 m hat.

2. Bodendämmelement nach Anspruch 1,
**dadurch gekennzeichnet,**
**dass** die Kaschierung (5) auf der Oberfläche (3) befestigt ist.

3. Bodendämmelement nach Anspruch 1,
**dadurch gekennzeichnet,**
**dass** die Kaschierung (5) als Folie, Vlies, oder Schaumschicht ausgebildet ist.

4. Bodendämmelement nach Anspruch 3,
**dadurch gekennzeichnet,**
**dass** die als Folie ausgebildete Kaschierung (5) eine Polyamid-Folie ist, deren Wasserdampfdurchlässigkeit sich mit der Feuchte im Boden verändert.

5. Bodendämmelement nach Anspruch 3,
**dadurch gekennzeichnet,**
**dass** die Vliese Monofile aus Polyäthylen, Polypropylen, Polyester, Polyamid sowie Mischungen daraus und/oder anorganischen Gläsern aufweisen.

6. Bodendämmelement nach Anspruch 3,
**dadurch gekennzeichnet,**
**dass** die Vliese aus flächigen, geschlungenen und/oder gewellten Fasern bestehen.

7. Bodendämmelement nach Anspruch 3,
**dadurch gekennzeichnet,**
**dass** die Vliese eine Materialstärke < 20 mm aufweisen.

8. Bodendämmelement nach Anspruch 1,
**dadurch gekennzeichnet,**
**dass** die Kaschierung (5) aus Gewebe aus Kunststoff-Fasern, Glasfasern und/oder verrottungsbeständigen Naturfasern ausgebildet ist.

9. Bodendämmelement nach Anspruch 1,
**dadurch gekennzeichnet,**
**dass** die Kaschierung (5) aus einer Polyurethan-Weichschaumschicht besteht, die einseitig mit einer Polyurethan-Membran beschichtet ist.

10. Bodendämmelement nach Anspruch 2,
**dadurch gekennzeichnet,**
**dass** die Kaschierung (5) vollflächig oder partiell mit dem Fasermaterial verklebt ist, wobei vorzugsweise flüssige oder pulverförmige Duroplaste, Thermoplasten, Elastomere, Ormocere, Kieselsol oder Wasserglas-Kunststoff-Mischungen als Kleber vorgesehen sind.

11. Bodendämmelement nach Anspruch 1,
**dadurch gekennzeichnet,**
**dass** die Kaschierung (5) zumindest im Bereich einer Kante einer großen Oberfläche (2) übersteht.

12. Bodendämmelement nach Anspruch 10,
**dadurch gekennzeichnet,**
**dass** der insbesondere zäh-elastische Kleber, wie Schmelzkleber, Bitumen, Polyurethan-Ethyl-Polymer-Bitumen streifenweise auf einer großen Oberfläche aufgetragen ist, wobei die Streifen in gleichmäßigem Abstand zueinander und insbesondere im rechten Winkel zueinander verlaufend angeordnet sind.

13. Bodendämmelement nach Anspruch 10,
**dadurch gekennzeichnet,**
**dass** der Kleber in die große Oberfläche (3) bis in eine Tiefe von 5 mm eingebracht ist.

14. Bodendämmelement nach Anspruch 10,
**dadurch gekennzeichnet,**
**dass** in der Oberfläche (3) mit Kleber ausfüllbar Ausnehmungen (7), insbesondere Nuten angeordnet sind.

15. Bodendämmelement nach Anspruch 1,
**dadurch gekennzeichnet,**
**dass** mehrere Dämmplatten (2) auf einer gemeinsamen Kaschierung (5) nebeneinander angeordnet sind.

16. Boden- oder Deckenaufbau, insbesondere für Gebäude, bestehend aus einer tragenden Unterkonstruktion, auf der eine Schalldämmschicht aus als Trittschalldämmplatten ausgebildeten Bodendämmelementen angeordnet ist und einem Bodenbelag,
**dadurch gekennzeichnet,**
**dass** zwischen dem Bodenbelag (10) und der Unterkonstruktion (8), insbesondere auf der Schalldämmschicht (9) eine diffusionsoffene und Wasser abweisende Abdeckung, insbesondere in Form einer Folie angeordnet ist, wobei die Abdeckung eine diffusionsäquivalente Luftschichtdicke S_{D} < 5 m hat.

17. Boden- oder Deckenaufbau nach Anspruch 16,
**dadurch gekennzeichnet,**
**dass** die Abdeckung als Kaschierung (5) gemäß den Ansprüchen 1 bis 15 ausgebildet ist.

18. Verfahren zur Herstellung eines Boden- oder Deckenaufbaues nach Anspruch 16, bei dem eine Schalldämmschicht aus als Tritschalldämmplatten ausgebildeten Bodendämmelementen auf einer Unterkonstruktion angeordnet und abschließend ein Bodenbelag aufgebracht wird,
**dadurch gekennzeichnet,**
**dass** vor dem Aufbringen des Bodenbelages die Schalldämmschicht mit einer diffusionsoffenen und wasserabweisenden Abdeckung überdeckt wird und die Abdeckung mit der Schalldämmschicht verklebt wird.

19. Verfahren nach Anspruch 18,
**dadurch gekennzeichnet,**
**dass** die Abdeckung derart erhitzt wird, dass sie sich flächig mit der Schalldämmschicht verbindet.

20. Verfahren nach Anspruch 18,
**dadurch gekennzeichnet,**
**dass** die Abdeckung als pulverförmiges Harz oder thermoplastische Polymere, wie beispielsweise PS, PVC, PE, Acrylate, Phenol-Melaminharze allein oder in Gemischen auf die Schalldämmschicht aufgebracht und anschließend erhitzt wird.

## Claims

1. Floor insulation element constructed as an impact noise insulating element, preferably made from fibre material, particularly from mineral fibres, preferably rock wool fibres, said element consisting of at least one insulation plate formed as a parallelepiped with two mutually parallel extending major surfaces and four lateral faces which are arranged at right angles to said major surfaces, two each of said lateral faces extending parallel to each other,
**characterized in**
**that** at least one major surface (3) includes a lining (5) which is open to diffusion and water-repellent and
**that** said lining (5) has a diffusion-equivalent air layer thickness S_{D} < 5 m, preferably < 1 m.

2. Floor insulation element according to claim 1,
**characterized in**
**that** said lining (5) is fixed to the surface (3).

3. Floor insulation element according to claim 1,
**characterized in**
**that** the lining (5) is formed as a film, a non-woven or a foam-layer.

4. Floor insulation element according to claim 3,
**characterized in**
**that** said lining (5) which is formed as a film is a polyamide film, of which the water steam permeability changes with the humidity in the floor.

5. Floor insulation element according to claim 3,
**characterized in**
**that** said non-wovens include monofils from polyethlene, polypropylene, polyester, polyamide as well as mixtures thereof and/or inorganic glasses.

6. Floor insulation element according to claim 3,
**characterized in**
**that** said non-wovens consist of two-dimensional, twined and/or undulated fibres.

7. Floor insulation element according to claim 3,
**characterized in**
**that** said non-wovens have a material thickness of < 20 mm.

8. Floor insulation element according to claim 1,
**characterized in**
**that** said lining (5) is formed of a woven textile from synthetic fibres, glass fibres and/or non-decaying natural fibres.

9. Floor insulation element according to claim 1,
**characterized in**
**that** said lining (5) consists of a polyurethane soft foam layer which is coated on one side thereof with a polyurethane membrane.

10. Floor insulation element according to claim 2,
**characterized in**
**that** said lining (5) is all over or partially bonded to said fibre material, with liquid or powdery duroplasts, thermoplasts, elastomers, ormocers, silica sol or mixtures of water glass and synthetic material being preferably provided as a bonding agent.

11. Floor insulation element according to claim 1,
**characterized in**
**that** said lining (5) is salient at least in the region of one edge of a major surface (2).

12. Floor insulation element according to claim 10,
**characterized in**
**that** said particularly viscoplastic bonding agent like hotmelt adhesives, bitumen, polyurethane-ethyl-polymer-bitumen is applied to one of said major surfaces in a strip-like fashion, said strips being equally spaced to each other and in particular arranged so as to extend at right angles to each other.

13. Floor insulation element according to claim 1,
**characterized in**
**that** said bonding agent is applied to said large surface (3) up to a depth of 5 mm.

14. Floor insulation element according to claim 10,
**characterized in**
**that** in said surface (3) recesses (7) and particularly grooves are arranged that may be filled with a bonding agent.

15. Floor insulation element according to claim 1,
**characterized in**
**that** several insulation plates (2) are arranged side by side on a common lining (5).

16. Floor and ceiling structure, particularly for buildings, said structure consisting of a supporting substructure having arranged thereon a sound insulation layer made up of floor insulation elements constructed as impact sound insulating panels and a floor covering,
**characterized in**
**that** between the floor covering (10) and said substructure (8), particularly on said sound insulation layer (9), a diffusion-open and water-repellent cover is arranged, particularly in the form of a film, said cover having a diffusion-equivalent air layer thickness S_{D} < 5 m.

17. Floor and ceiling structure according to claim 16,
**characterized in**
**that** said cover is formed as a lining (5) according to the claims 1 through 15.

18. Method of producing a floor and ceiling structure according to claim 17, wherein a sound insulation layer made up of floor insulation elements constructed as impact sound insulating panels is arranged on a substructure and a floor covering is finally applied to it,
**characterized in**
**that** prior to applying said floor covering said sound insulation layer is covered with a diffusion-open and water-repellent cover and said cover is glued to said sound insulation layer.

19. Method according to claim 18,
**characterized in**
**that** said cover is heated in such a way that it is two-dimensionally connected to said thermal and/or sound insulation layer.

20. Method according to claim 18,
**characterized in**
**that** the cover is applied to said sound insulation layer as a powdery resin or as thermoplastic polymers such as PS, PVC, PE, acrylate, phenol-melamine-resins alone or in mixtures and is subsequently heated.

## Revendications

1. Elément d'isolation pour sol configuré comme élément d'isolation aux bruits de pas, de préférence en matériau en fibres, en particulier en fibres minérales, de préférence en fibres de laine minérale, consistant en au moins une plaque isolante configurée comme un parallélépipède avec deux grandes surfaces parallèles l'une à l'autre et quatre surfaces latérales qui sont placées à angle droit par rapport aux grandes surfaces, deux surfaces latérales étant respectivement parallèles l'une à l'autre,
**caractérisé en ce**
**qu'**au moins une grande surface (3) présente un contrecollage (5) ouvert à la diffusion et hydrofuge et que le contrecollage (5) a une épaisseur de couche d'air équivalente à la diffusion S_{D}< 5 m, de préférence < 1 m.

2. Elément d'isolation pour sol selon la revendication 1,
**caractérisé en ce**
**que** le contrecollage (5) est fixé sur la surface (3).

3. Elément d'isolation pour sol selon la revendication 1,
**caractérisé en ce**
**que** le contrecollage (5) est configuré comme une feuille, un non-tissé ou une couche de mousse.

4. Elément d'isolation pour sol selon la revendication 3,
**caractérisé en ce**
**que** le contrecollage (5) configuré comme une feuille est une feuille de polyamide dont la perméabilité à la vapeur d'eau varie avec l'humidité dans le sol.

5. Elément d'isolation pour sol selon la revendication 3,
**caractérisé en ce**
**que** les non-tissés présentent des monofils en polyéthylène, polypropylène, polyester, polyamide ainsi que des mélanges de ceux-ci et/ou des verres anorganiques.

6. Elément d'isolation pour sol selon la revendication 3,
**caractérisé en ce**
**que** les non-tissés sont constitués par des fibres en surface plane, en boucles et/ou ondulées.

7. Elément d'isolation pour sol selon la revendication 3,
**caractérisé en ce**
**que** les non-tissés présentent une épaisseur de matériau < 20 mm.

8. Elément d'isolation pour sol selon la revendication 1,
**caractérisé en ce**
**que** le contrecollage (5) est configuré en tissu en fibres synthétiques, en fibres de verre et/ou en fibres naturelles résistantes au pourrissement.

9. Elément d'isolation pour sol selon la revendication 1,
**caractérisé en ce**
**que** le contrecollage (5) est constitué par une couche de mousse souple en polyuréthane qui est revêtue sur un côté par une membrane en polyuréthane.

10. Elément d'isolation pour sol selon la revendication 2,
**caractérisé en ce**
**que** le contrecollage (5) est collé sur toute la surface ou partiellement au matériau en fibres, cependant que de préférence des duroplastes liquides ou poudreux, des thermoplastiques, des élastomères, des ormocères, du sol silicieux ou des mélanges de verre soluble et de matière synthétique sont prévus comme colles.

11. Elément d'isolation pour sol selon la revendication 1,
**caractérisé en ce**
**que** le contrecollage (5) est en porte-à-faux au moins dans la zone dune arête d'une grande surface (2).

12. Elément d'isolation pour sol selon la revendication 10,
**caractérisé en ce**
**que** la colle en particulier viscoplastique, comme la colle fusible, le bitume, le bitume polymère polyuréthane éthyle est appliqué par bandes sur une grande surface, les bandés étant placées équidistantes l'une de l'autre et en particulier à un angle droit l'une par rapport à l'autre.

13. Elément d'isolation pour sol selon la revendication 10,
**caractérisé en ce**
**que** la colle est mise en place dans la grande surface (3) jusqu'à une profondeur de 5 mm.

14. Elément d'isolation pour sol selon la revendication 10,
**caractérisé en ce**
**que** dans la surface (3) il est ménagé des évidements (7) qui peuvent être remplis de colle, en particulier des rainures.

15. Elément d'isolation pour sol selon la revendication 1,
**caractérisé en ce**
**que** plusieurs plaques isolantes (2) sont placées l'une à côté de l'autre sur un contrecollage commun (5).

16. Elément d'isolation pour sol ou pour plafond , en particulier pour bâtiments, constitué par une construction porteuse sous-jacente sur laquelle une couche d'isolation acoustique est placée qui est constituée par des éléments d'isolation pour sol configurés comme des plaques d'isolation aux bruits de pas et par un revêtement de sol,
**caractérisée en ce**
**qu'**un recouvrement ouvert à la diffusion et hydrofuge, en particulier sous forme de feuille, est placé entre le revêtement de sol (10) et la construction sous-jacente (8), en particulier sur la couche d'isolation acoustique (9), le recouvrement ayant une couche d'épaisseur d'air équivalente à la diffusion S_{D}< 5 m.

17. Structure de sol ou de plafond selon la revendication 16,
**caractérisée en ce**
**que** le recouvrement est configuré comme un contrecollage (5) selon les revendications 1 à 15.

18. Procédé de fabrication d'une structure de sol ou de plafond selon la revendication 16 pour lequel une couche d'isolation acoustique est placée sur une construction sous-jacente et un revêtement de sol est appliqué dessus pour terminer,
**caractérisé en ce**
**qu'**avant l'application du revêtement de sol la couche d'isolation acoustique est recouverte avec un recouvrement ouvert à la diffusion et hydrofuge et le recouvrement est collé à la couche d'isolation acoustique.

19. Procédé selon la revendication 18,
**caractérisé en ce**
**que** le recouvrement est réchauffé de telle manière qu'il se relie en surface plane avec la couche d'isolation acoustique.

20. Procédé selon la revendication 18,
**caractérisé en ce**
**que** le recouvrement est appliqué comme résine en poudre ou comme polymères thermoplastiques, comme par exemple le polystyrène, le chlorure de polyvinyle, le polyéthylène, les acrylates, les résines phénoliques et mélamine seules ou en mélanges sur la couche d'isolation acoustique et est ensuite réchauffé.
